# EUROPEAN PATENT SPECIFICATION

(11) **EP 2 806 750 B1**
(45) Date of publication and mention of the grant of the patent: **30.10.2019**
(21) Application number: 13701093.0
(22) Date of filing: 24.01.2013
(51) Int. Cl.: A23G 3/02, A23G 3/12, A23G 3/20

(54) **MACHINE FOR PRODUCING FOOD PRODUCTS**
MASCHINE FÜR DIE HERSTELLUNG VON LEBENSMITTELN
MACHINE POUR LA PRODUCTION DE DENRÉES ALIMENTAIRES

(30) Priority: 24.01.2012 IT BG20120003
(43) Date of publication of application: 03.12.2014
(73) Proprietor: Nuova Euromec S.r.l., 24057 Martinengo (BG) (IT)
(72) Inventor: RIZZI, Mario, 24057 Martinengo (BG) (IT); RIZZI, Roberto, 24123 Bergamo (IT)
(74) Representative: Giavarini, Francesco
(86) International application number: PCT/EP2013/051334
(87) International publication number: WO 2013/110701

(56) References cited:
- EP-A2- 1 000 549
- DE-A1-102007 010 063
- DE-C- 677 444
- US-A- 1 465 326
- US-B1- 6 422 853

## Description

The present invention relates to a machine for producing food products. In particular, the present invention relates to a machine for producing confectionery products and more in particular a machine for producing confectionery products such as hard or soft sweets, chewing gum, bubble gum comprising an outer casing, generally open on one side, and a filling consisting of a soft product, such as: jam, chocolate cream or similar creams, fondant, concentrated glucose syrup, a gummy mass of pectin and/or starch and/or gelatine or other gelling agents, and similar products.

Within the scope of food products in general, and in particular confectionery products, there are known products consisting of a closed shell, of a first food, for example moulded hard boiled sugar caramel, and an inner core of a second product, generally with a taste and/or consistency and/or properties different from the first product.

Instead, at industrial level there are no known confectionery products with a half-shell produced with a first food product, hard or soft, obtained with moulding systems, and a filling produced with a second food product with properties different from the first, the production of these products generally taking place through craft or semi-craft manufacturing processes or through systems for pouring the sugar mass in liquid form.

In fact, through moulding systems conventionally used to prepare, for example, filled sweets or chewing gum, industrial machines are unable to produce the open structure of the type described previously with liquid, semi-liquid or cream fillings. Such moulding systems are known from e.g. DE 10 2007 010 063 A1 and US 6,422,853 B1.

However, with craft type production it is not possible to obtain products of homogeneous quality and, moreover, productivity is low and costs are high.

It would therefore be desirable to obtain a machine for producing these products at industrial level that makes it possible to expand and significantly diversify the offer of food products, in particular of confectionery products on the market.

The aim of the present invention is therefore to provide a machine for producing food products, and in particular confectionery products.

Within the aforesaid aim, an object of the present invention is to provide a machine for producing food products, and in particular confectionery products comprising an outer casing produced with a first food product and an inner part produced with second food product having properties different from the first, and in particular a semi-liquid or creamy product.

A further object of the present invention is to provide a machine for producing food products of the aforesaid type which makes it possible to obtain a high level of production of industrial type.

Another object of the present invention is to provide a machine for producing food products which makes it possible to obtain a high level of homogeneity in the quality of these food products.

Yet another object of the present invention is to provide a machine for producing food products which makes it possible to quickly and effectively vary the type of this product. One more object of the present invention is to provide a machine for producing food products which offers assurance of safety, reliability, ease of maintenance and with which it is possible to obtain products at competitive costs.

The aforesaid objects are achieved by a machine for producing food products, in particular confectionery products, according to claim 1.

The machine according to the invention is particularly advantageous for producing food products comprising an outer part, for example, bowl-shaped, comprising a first food product and an inner part comprising a second food product. For the purposes of the present invention, with the term bowl-shaped it is intended that the outer part is essentially shaped as a half-shell produced with the first food product and adapted to contain therein the second food product. In practice, in this case, in the machine according to the invention, the outer part of the food product is produced from a continuous strip, for example a U-shaped strip, produced with a first food product, for example a hard boiled sugar caramel, a chewy fruit sweet, a soft milk or fruit sweet, chewing gum or bubble gum. This strip has a groove homogeneously filled with a second food product, for example jam, cream, concentrated glucose syrup, or a gummy mass of a food product. The shaped strip containing the filling, from the loading station is sent to the processing station where the edges of the strip are folded over, closed at the ends and cut to form the containing structure with the first food product on the outside and the filling on the inside given by second food product, semi-liquid, creamy or gummy.

As will be better described below, given the high operating speed of the machine it is possible to produce, at industrial level, confectionery products having an open containing structure of one type and a filling of another type in an efficient and economically viable manner and with high homogeneity in quality.

Although the machine according to the invention is particularly suitable for producing products of the type described above, it can also be used to produce multi-component, multi-layer products, for example food products such as sweets or chewing gum with a sandwich structure (for example, having a central layer produced with one food product interposed between two outer layers, the same as or different from each other, different from said central layer), and to produce single component food products, such as soft chewy milk or fruit sweets.

Preferably, the machine according to the invention comprises a first chain and a second chain, which are mounted facing each other defining a work surface interposed therebetween. In practice, the shaped strip containing the filling is supported by the first chain and is sent to this work surface, where it undergoes the forming and cutting action by half-moulds arranged on the second chain.

Advantageously, said first and second chains are mounted respectively on a first and a second pair of substantially horizontal axes, each producing a closed loop path.

Preferably said first chain extends in said loading station. In this way, the strip is picked up in the loading station and sent to the processing station without interposing further transfer means.

In a preferred embodiment of the machine according to the invention, said first and second pluralities of half-moulds are integral with the movement of said second chain along said first direction of advance. In this way, movement of the first and second chains makes it possible to convey and simultaneously form and cut the shaped strip.

In a particularly preferred embodiment of the machine according to the invention, said first and a second plurality of half-moulds are mounted sliding on said second chain so as to be movable between said first rest position and said second forming and cutting position, along a second direction substantially perpendicular to said first direction of advance. In other words, while the shaped strip advances along the direction of advance, the half-moulds are operated so as to move crosswise with respect to said direction of advance, in a substantially horizontal plane, firstly moving to the closed position and exerting the action to form and cut said food products from said strip and subsequently to the open position to allow unloading of said food products.

In this case, said second operating means preferably comprise a first and a second shaped surface adapted to impart to said half-moulds a movement along said second direction.

Said first and second shaped surfaces can be substantially symmetrical so as to impart a substantially synchronous movement respectively to said first and second pluralities of half-moulds. Alternatively, said first and second shaped surfaces have different profiles and are adapted to move said first and second pluralities of half-moulds in different times. Preferably, the machine according to the invention comprises pouring means of said second food product positioned in said loading station. In this way, pouring of the second food product into the groove present in the shaped strip produced with the first food product takes place in the loading area of said strip in the machine, reducing the overall dimensions of the production plant and facilitating production operations.

Further features and advantages of the present invention will be more apparent from the description of preferred embodiments, illustrated by way of non-limiting example in the accompanying figures, wherein:
- Fig. 1 is a side view of an embodiment of the machine for producing food products according to the present invention;
- Fig. 2 is a perspective view of a portion of the machine of Fig. 1;
- Fig. 3 is an enlarged perspective view of some details of Fig. 2;

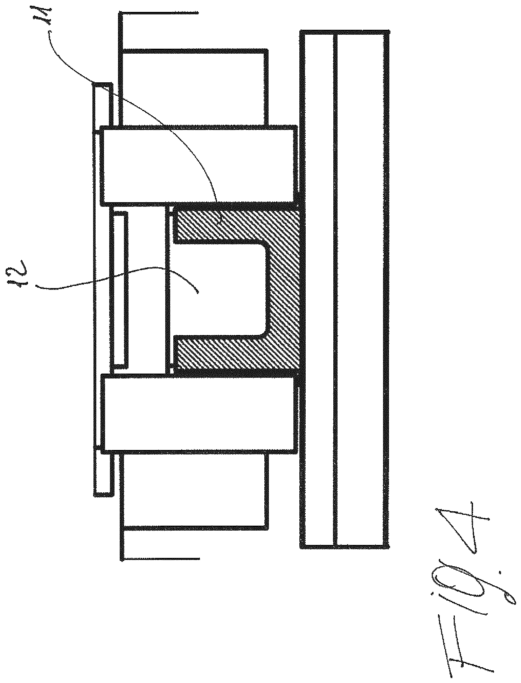

- Fig. 4 is a sectional view of the food products obtainable with the machine according to the present invention;
- Fig. 5 is a detailed view of a first embodiment of the work surface of a machine for producing food products according to the present invention;
- Fig. 6 is a detailed view of a second embodiment of the work surface of a machine for producing food products according to the present invention.

With reference to accompanying figures, there is illustrated an embodiment of a machine for producing food products 10 according to the present invention, indicated as a whole with the reference number 1.

The food products 10 obtainable with the machine 1 according to the present invention generally comprise an outer part 11 comprising a first food product and an inner part 12 comprising a second food product.

By way of example, the outer part 11 can be produced with a first food product, for example a hard boiled sugar caramel, a chewy fruit sweet, a soft milk or fruit sweet, chewing gum or bubble gum, while the inner part 12 can, for example, consist of a second food product, preferably semi-liquid, creamy or gummy, for example jam, cream, concentrated glucose syrup, or a gummy mass of a food product.

The machine 1 for producing food products 10 generally comprises a supporting structure 2, a loading station 3 of a precursor of said food products and a moulding station 4 of said food products. At the opposite end of the moulding station 4 with respect to the loading station 3, there is generally an unloading and collecting station of the food products 10, not illustrated in the figures.

One of the peculiar features of the machine 1 for producing food products 10 according to the present invention is given by the fact that said moulding station 4 comprises a first supporting and conveying chain 41 and a second processing chain 42. The first 41 and second 42 chains can advantageously be provided respectively with first supporting and conveying plates 413 and with second upper closing plates 423.

In particular, said second processing chain 42 comprises a first 51 and a second 52 plurality of half-moulds opposite each other and movable between a first rest position and a second forming and cutting position of said food products 10, according to operating mechanisms described in detail below.

The machine 1 for producing food products 10 according to the present invention also comprises first operating means of said first 41 and second 42 chains for movement of said food products 10 along a first direction of advance, for example consisting of one or more electric motors connected to said first 41 and second 42 chains. For example, there can be at least one electric motor connected to each chain, or a single motor connected with appropriate transmission systems to both chains.

Advantageously, the first 41 and the second 42 chain are mounted respectively on a first pair of horizontal axes 411, 412 and on a second pair of horizontal axes 421, 422, so as to produce a closed loop path around the respective pairs of axes.

The first chain 41 normally has a smaller width with respect to the second chain 42 and is mounted so as to be centred with respect to said second chain. In other words, the first 41 and the second 42 chain preferably have different widths and are mounted one over the other so that the respective central axes along the direction of advance fall in the same vertical plane. The forming and cutting of the food products 10 is performed through second operating means of said half-moulds 51, 52 which are adapted to move said half-moulds 51, 52 between a first rest position and a second forming and cutting position and vice versa.

In practice, in the machine 1 according to the invention, the outer part 11 of the food product 10 is produced from a continuous strip 100, for example a U-shaped strip, produced with a first food product. The strip 100 is usually produced by a drawing machine or extruder and is fed to the machine 1 in the loading area 3.

The strip 100 has a groove which is filled homogeneously with a second food product, for example jam, cream, concentrated glucose syrup, or a gummy mass of a food product.

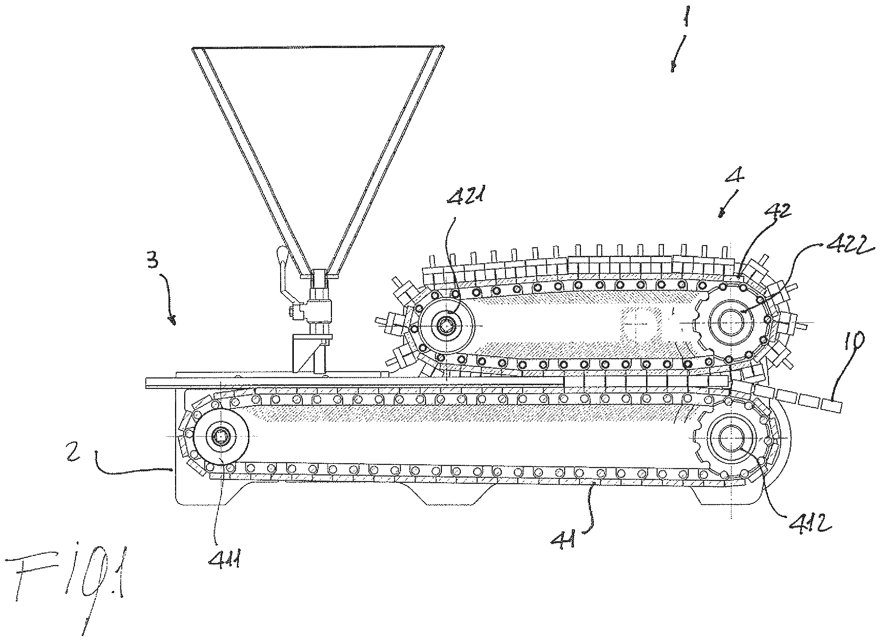

Filling of the strip 100 is preferably carried out in the loading area 3. For this purpose, the machine 1 according to the invention can advantageously comprise pouring means of said second food product which are positioned at said loading station 3. These pouring means can, for example, consist of a hopper loading system, of the type illustrated in Fig. 1, or by one or more gear pumps with feed pipe that feeds the product into the groove of the strip 100 or other systems. Naturally, in the case in which the filling consists of several food products of different types, it is possible to provide several pouring means, according to the number and quality of said food products. Moreover, heating means can be provided to promote fluidization and pouring of the filling food products.

From the loading station 3, the shaped strip 100 containing the filling is sent to the processing station 4 where the edges of the strip 100 are folded, closed and cut to form a containing structure with the first food product on the outside 11 and the filling given by the second food product, semi-liquid, creamy or gummy, on the inside 12.

Advantageously, as illustrated in Fig. 1, said first chain 41 also extends in said loading station 3. In this way, the strip 100 is picked up in the loading station 3 and sent to the processing station 4 without further transfer means being interposed.

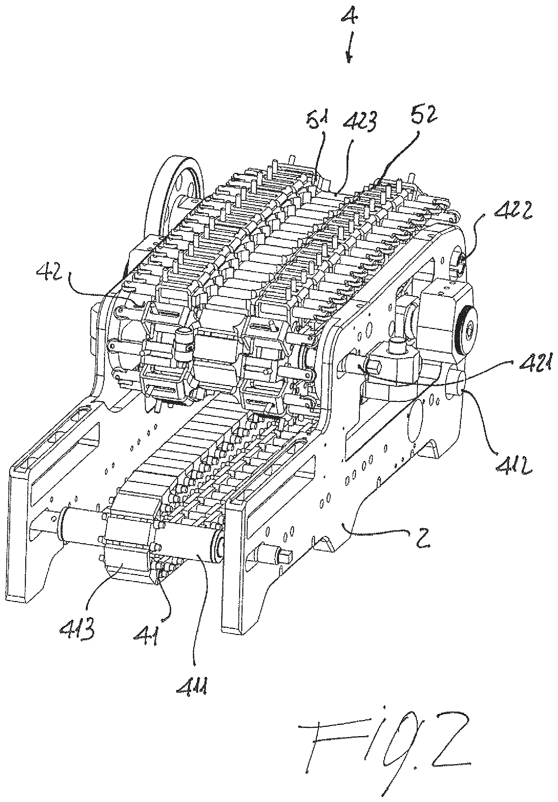

With reference to Figs. 2, 3, 5 and 6, in the machine 1 for producing food products 10 according to the present invention, the first 41 and the second 42 chain are advantageously mounted facing each other so as to define a work surface 50 interposed therebetween.

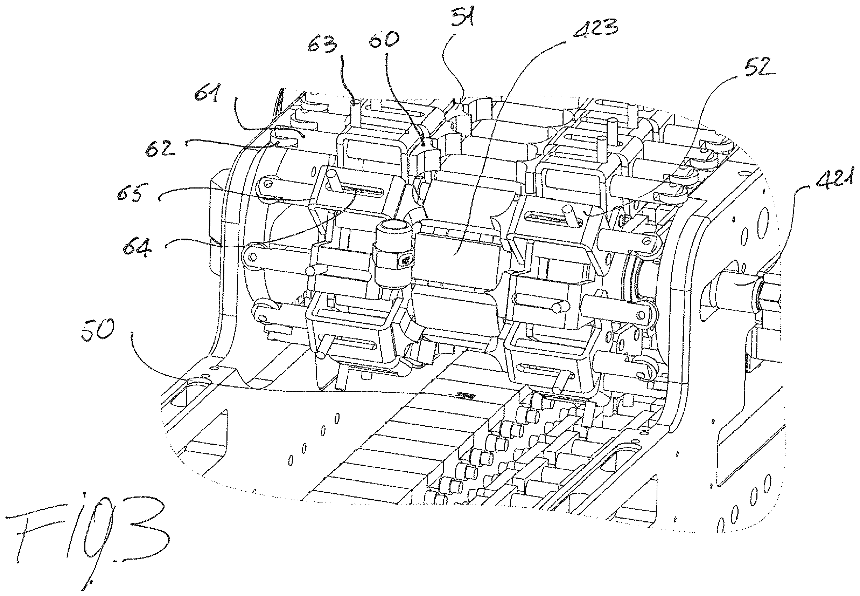

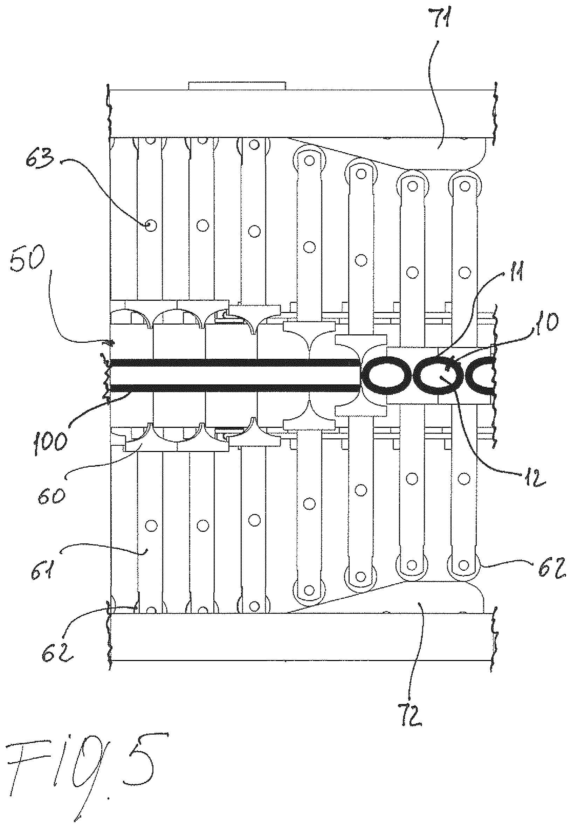

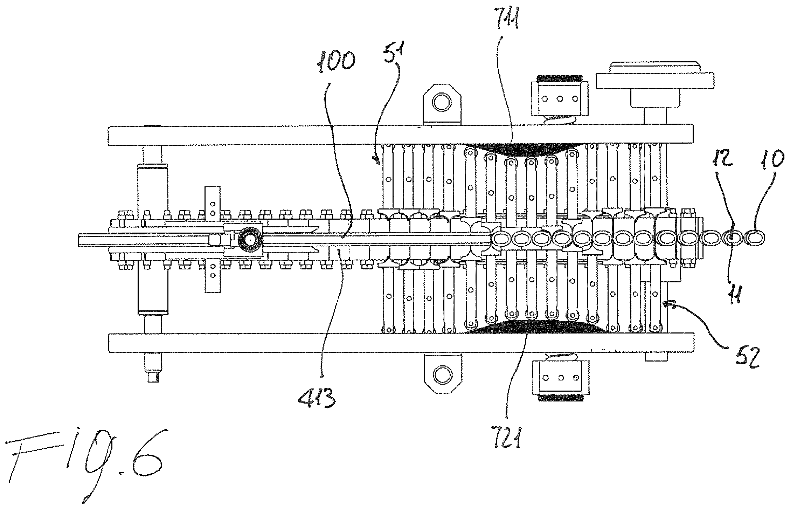

In the embodiment illustrated of the machine 1 for producing food products 10 according to the present invention, the first and the second pluralities of half-moulds 51 and 52 are integral with the movement of said second chain 42 along said first direction of advance. In other words, movement of the second chain 42 causes movement of the half-moulds 51 and 52 along said direction of advance. In practice, in this way, movement of the first 41 and second 42 chains makes it possible to convey and simultaneously form and cut the shaped strip 100. Advantageously, the first and the second pluralities of half-moulds 51 and 52 are mounted sliding on said second chain 42 so as to be movable, between said first rest position and said second forming and cutting position, along a second direction substantially perpendicular to said first direction of advance. In practice, the half-moulds 51 and 52 are constrained to the second chain 52 so as to follow it along the direction of advance. These half-moulds 51 and 52, in the rest position, are spaced apart from each other, as illustrated for example in Figs. 2 and 3 and in the left part of Figs. 5 and 6. Through the second operating means, the half-moulds 51 and 52 are moved towards each other so as to close around the strip 100 and cause forming and cutting of the food products 10, before being moved away from each other again to enable unloading of said food products 10.

With reference to Figs. 5 and 6, in a preferred embodiment of the machine 1 for producing food products 10 according to the present invention, said second operating means comprise a first 71, 711 and a second 72, 721 shaped surface, which are adapted to impart to said half-moulds 51, 52 a movement along said second direction.

In practice, with reference to Figs. 5 and 6, through the first chain 41 the strip 100 forming the precursor of the food products 10 is sent to the work surface 50 formed between said first 41 and second 42 chains. In the accompanying figures, the direction of advance is from left to right.

Outside the work surface 50, the half-moulds 51 and 52 are in the rest position, spaced apart from each other. Inside the work surface 50 there are positioned the first 71, 711 and second 72, 721 surfaces, which force the half-moulds 51, 52 to move towards each other so as to close around the strip 100 and cause forming and cutting of the food products 10. In proximity of the exit from the work surface (right side of the figures), the first 71, 711 and second 72, 721 surfaces are shaped so as to enable the half-moulds 51, 52 to move apart, thus enabling unloading of the food products 10.

In a possible embodiment, illustrated in Fig. 5, the first 71 and the second 72 shaped surfaces are substantially symmetrical and are adapted to impart a substantially synchronous movement respectively to said first and second pluralities of half-moulds 51 and 52. In other words, in this embodiment, the first 71 and the second 72 shaped surfaces have the same profile and are positioned in the same point along the direction of advance so as to cause simultaneous opening and closing of the first and second pluralities of half-moulds 51 and 52 in the same position along the direction of advance.

Alternatively, as illustrated in Fig. 6, the first 711 and the second 721 shaped surfaces have different profiles and are adapted to move said first and second pluralities of half-moulds 51 and 52 in different times. In practice, with reference to Fig. 6, the profiles of the first portion of the first 711 and second 721 surfaces are identical, causing simultaneous closing of the first and second pluralities of half-moulds 51 and 52 in the same position along the direction of advance. Continuing along the direction of advance, the second shaped surface 721 extends further towards the inside with respect to the first shaped surface 711. In this way, the first plurality of half-moulds 51 return to the rest position before the second plurality of half-moulds 52. This can be advantageous, for example, in the case of wishing to unload the food products 10 towards one of the sides and not centrally. The shape and/or positioning of the first 711 and second 721 surfaces can be varied according to requirements.

In the most general embodiment, the half-moulds 51 and 52 comprise supporting means for operative connection with the second chain 42, forming and cutting means for forming and cutting said food products 10 and means for operative coupling with said second operating means for their movement between said first rest position and said second forming and cutting position and vice versa.

In the embodiments illustrated, the half-moulds 51 and 52 comprise forming and cutting means comprising a shaped head 60 adapted to impart a substantially elliptical shape to said food products 10. This shape can be different, so as to give, for example, a circular, square, rhomboid or star shape to said food products.

Moreover, in the embodiments illustrated the half-moulds 51 and 52 comprise a support 65, in which there is mounted a spindle 61, which supports the shaped head 60 at one end. This spindle 61 is provided with guide means, for example a guide pin 63 adapted to slide in a groove 64 produced in said support 65, and to guide the travel of the spindle 61 in a direction substantially perpendicular to the first direction of advance. At the opposite end of the spindle 61 with respect to the shaped head 60 there are sliding means, consisting for example of rollers or wheels 62, adapted to slide on the shaped surfaces 711 and 712, causing movement of the spindle 61 and consequently of the shaped head 60 between said first rest position and said second forming and cutting position. Elastic means, for example springs, can be provided to ensure the return of the spindle 61 and of the shaped head 60 to the rest position. Alternatively, further shaped surfaces, which interact, for example, with the pin 63 during advance of the second chain 42, can be provided to return the half-moulds to the rest position. The second operating means can also consist of pneumatic or hydraulic devices, for example piston means, connected with the half-moulds 51 and 52 and controlled electronically so as to move said half-moulds 51 and 52 between said first rest position and said second forming and cutting position and vice versa.

As is apparent from the description provided, with the machine for producing food products, in particular confectionery products, according to the present invention it is possible to achieve the aforesaid objects. In particular, the machine for producing food products, in particular confectionery products, of the invention makes it possible to obtain, in an industrially advantageous way, food products, and in particular confectionery products, comprising an outer casing produced with a first food product and an inner part produced with a second food product having properties different from the first, in particular, a semi-liquid or creamy product.

Although the machine according to the invention is particularly suitable for producing products of the type described previously, it can also be used to produce multi-component, multi-layer products, such as food products like sweets or chewing gum with a sandwich structure (for example, having a central layer produced with one food product interposed between two outer layers, the same as or different from each other, different from said central layer), and to produce single component food products, such as gummy sweets or the like.

## Claims

1. A machine (1) for producing food products (10) comprising a supporting structure (2), a loading station (3) of a precursor of said food products and a moulding station (4) of said food products, said moulding station (4) being **characterized in that** it comprises a first supporting and conveying chain (41) and a second processing chain (42), said second processing chain (42) comprising a first (51) and a second (52) plurality of half-moulds opposite each other and movable between a first rest position and a second forming and cutting position of said food products (10), said machine (1) also comprising first operating means of said first (41) and second (42) chains for movement of said food products (10) along a first direction of advance and second operating means of said half-moulds (51; 52) adapted to move said half-moulds (51; 52) between a first rest position and a second forming and cutting position and vice versa, said half-moulds (51; 52) comprising supporting means for operative connection with said second processing chain (42), and forming and cutting means for simultaneous forming and cutting of said food products (10).

2. The machine (1) according to claim 1, **characterized in that** said first (41) and second (42) chains are mounted facing each other defining a work surface (50) interposed therebetween.

3. The machine (1) according to claim 1 or 2, **characterized in that** said first (41) and second (42) chains are mounted respectively on a first (411; 412) and a second (421; 422) pair of substantially horizontal axes.

4. The machine (1) according to one or more of the preceding claims, **characterized in that** said first chain (41) extends in said loading station (3).

5. The machine (1) according to one or more of the preceding claims, **characterized in that** said first and second pluralities of half-moulds (51; 52) are integral with the movement of said second chain (42) along said first direction of advance.

6. The machine (1) according to one or more of the preceding claims, **characterized in that** said first and a second pluralities of half-moulds (51; 52) are mounted sliding on said second chain (42) so as to be movable, between said first rest position and said second forming and cutting position, along a second direction substantially perpendicular to said first direction of advance.

7. The machine (1) according to claim 6, **characterized in that** said second operating means comprise a first (71; 711) and a second (72; 721) shaped surface adapted to impart to said half-moulds (51; 52) a movement along said second direction.

8. The machine (1) according to claim 7, **characterized in that** said first (71) and second (72) shaped surfaces are substantially symmetrical and are adapted to impart a substantially synchronous movement respectively to said first and second pluralities of half-moulds (51; 52).

9. The machine (1) according to claim 7, **characterized in that** said first (711) and second (721) shaped surfaces have different profiles and are adapted to move said first and second pluralities of half-moulds (51; 52) in different times.

10. The machine (1) according to one or more of the preceding claims, **characterized in that** it comprises pouring means of a food product positioned at said loading station (3).

## Patentansprüche

1. Maschine (1) für die Herstellung von Lebensmitteln (10), umfassend: eine Trägerstruktur (2), eine Ladestation (3) eines Vorläufers der Lebensmittel und eine Formstation (4) der Lebensmittel, wobei die Formstation (4) **dadurch gekennzeichnet ist, dass** sie eine erste Trag- und Förderkette (41) und eine zweite Verarbeitungskette (42) umfasst, wobei die zweite Verarbeitungskette (42) eine erste (51) und eine zweite (52) Vielzahl von Formhälften umfasst, die einander gegenüberliegen und zwischen einer ersten Ruheposition und einer zweiten Form- und Schneidposition der Lebensmittel (10) bewegbar sind, wobei die Maschine (1) auch eine erste Betätigungseinrichtung der ersten (41) und der zweiten (42) Kette zur Bewegung der Lebensmittel (10) entlang einer ersten Vorschubrichtung und eine zweite Betätigungseinrichtung der Formhälften (51; 52) umfasst, die ausgelegt sind, um die Formhälften (51; 52) zwischen einer ersten Ruheposition und einer zweiten Form- und Schneidposition und umgekehrt zu bewegen, wobei die Formhälften (51; 52) Trageinrichtungen zur bertriebswirksamen Verbindung mit der zweiten Verarbeitungskette (42) und Form- und Schneideinrichtungen zum gleichzeitigen Formen und Schneiden der Lebensmittel (10) umfassen.

2. Maschine (1) nach Anspruch 1, **dadurch gekennzeichnet, dass** die erste (41) und die zweite (42) Kette einander zugewandt montiert sind und eine Arbeitsfläche (50), die dazwischen angeordnet ist, definieren.

3. Maschine (1) nach Anspruch 1 oder 2, **dadurch gekennzeichnet, dass** die erste (41) und die zweite (42) Kette jeweils an einem ersten (411; 412) und einem zweiten (421; 422) Paar von im Wesentlichen horizontalen Achsen montiert sind.

4. Maschine (1) nach einem oder mehreren der vorstehenden Ansprüche, **dadurch gekennzeichnet, dass** sich die erste Kette (41) in die Ladestation (3) erstreckt.

5. Maschine (1) nach einem oder mehreren der vorstehenden Ansprüche, **dadurch gekennzeichnet, dass** die erste und die zweite Vielzahl von Formhälften (51; 52) einstückig mit der Bewegung der zweiten Kette (42) entlang der ersten Vorschubrichtung ausgebildet sind.

6. Maschine (1) nach einem oder mehreren der vorstehenden Ansprüche, **dadurch gekennzeichnet, dass** die erste und zweite Vielzahl von Formhälften (51; 52) gleitend auf der zweiten Kette (42) montiert sind, um zwischen der ersten Ruheposition und der zweiten Form- und Schneidposition entlang einer zweiten Richtung bewegbar zu sein, die im Wesentlichen senkrecht zu der ersten Vorschubrichtung ist.

7. Maschine (1) nach Anspruch 6, **dadurch gekennzeichnet, dass** die zweiten Betätigungseinrichtungen eine erste (71; 711) und eine zweite (72; 721) geformte Oberfläche umfassen, die zum Ausüben einer Bewegung entlang der zweiten Richtung auf die Formhälften (51; 52) ausgelegt ist.

8. Maschine (1) nach Anspruch 7, **dadurch gekennzeichnet, dass** die erste (71) und die zweite (72) geformte Oberfläche im Wesentlichen symmetrisch sind und ausgelegt sind, eine im Wesentlichen synchrone Bewegung in Bezug auf die erste und die zweite Vielzahl von Formhälften (51; 52) auszuüben.

9. Maschine (1) nach Anspruch 7, **dadurch gekennzeichnet, dass** die erste (711) und die zweite (721) geformte Oberfläche unterschiedliche Profile aufweisen und dazu ausgelegt sind, die erste und zweite Vielzahl von Formhälften (51; 52) zu unterschiedlichen Zeiten zu bewegen.

10. Maschine (1) nach einem oder mehreren der vorstehenden Ansprüche, **dadurch gekennzeichnet, dass** sie Gießeinrichtungen eines Lebensmittels umfasst, die an der Ladestation (3) angeordnet sind.

## Revendications

1. Machine (1) pour la production de produits alimentaires (10) comprenant une structure de support (2), un poste de chargement (3) d'un précurseur desdits produits alimentaires et un poste de moulage (4) desdits produits alimentaires, ledit poste de moulage (4) étant **caractérisé en ce qu'**il comprend une première chaîne de support et de transport (41) et une seconde chaîne de traitement (42), ladite seconde chaîne de traitement (42) comprenant des première (51) et seconde (52) pluralités de demi-moules opposés mutuellement et mobiles entre une première position de repos et une seconde position de formage et de découpe desdits produits alimentaires (10), ladite machine (1) comprenant également des premiers moyens d'actionnement desdites première (41) et seconde (42) chaînes pour un déplacement desdits produits alimentaires (10) le long d'une première direction de progression et des seconds moyens d'actionnement desdits demi-moules (51 ; 52) adaptés pour déplacer lesdits demi-moules (51 ; 52) entre une première position de repos et une seconde position de formage et de découpe, et inversement, lesdits demi-moules (51 ; 52) comprenant des moyens de support pour une connexion opérationnelle avec ladite seconde chaîne de traitement (42), et des moyens de formation et de découpe pour une formation et une découpe simultanées desdits produits alimentaires (10).

2. Machine (1) selon la revendication 1, **caractérisée en ce que** lesdites première (41) et seconde (42) chaînes sont montées en vis-à-vis, en définissant une surface de travail (50) interposée entre celles-ci.

3. Machine (1) selon la revendication 1 ou 2, **caractérisée en ce que** lesdites première (41) et seconde (42) chaînes sont montées respectivement sur des première (411 ; 412) et seconde (421 ; 422) paires d'axes sensiblement horizontaux.

4. Machine (1) selon une ou plusieurs des revendications précédentes, **caractérisée en ce que** ladite première chaîne (41) s'étend dans ledit poste de chargement (3).

5. Machine (1) selon une ou plusieurs des revendications précédentes, **caractérisée en ce que** lesdites première et seconde pluralité de demi-moules (51 ; 52) font partie intégrante du mouvement de ladite seconde chaîne (42) dans ladite première direction. de progression.

6. Machine (1) selon une ou plusieurs des revendications précédentes, **caractérisée en ce que** lesdites première et seconde pluralités de demi-moules (51 ; 52) sont montées coulissant sur ladite seconde chaîne (42) de manière à être mobiles, entre ladite première position de repos et ladite seconde position de formage et de découpe, dans une seconde direction sensiblement perpendiculaire à ladite première direction de progression.

7. Machine (1) selon la revendication 6, **caractérisée en ce que** lesdits seconds moyens de fonctionnement comprennent des première (71 ; 711) et seconde (72 ; 721) surface mises en forme adaptées pour imprimer auxdits demi-moules (51 ; 52) un mouvement dans ladite seconde direction.

8. Machine (1) selon la revendication 7, **caractérisée en ce que** lesdites première (71) et seconde (72) surfaces mises en forme sont sensiblement symétriques et sont adaptées pour imprimer un déplacement sensiblement synchrone respectivement auxdites première et seconde pluralités de demi-moules (51 ; 52).

9. Machine (1) selon la revendication 7, **caractérisée en ce que** lesdites première (711) et seconde (721) surfaces mises en forme ont des profils différents et sont adaptées pour déplacer lesdites première et seconde pluralités de demi-moules (51 ; 52) à des moments différents.

10. Machine (1) selon une ou plusieurs des revendications précédentes, **caractérisée en ce qu'**elle comprend des moyens de versement d'un produit alimentaire positionnés au niveau dudit poste de chargement (3).
